# EUROPEAN PATENT SPECIFICATION

(11) **EP 1 148 721 B1**
(45) Date of publication and mention of the grant of the patent: **11.07.2007**
(21) Application number: 00830267.1
(22) Date of filing: 10.04.2000
(51) Int. Cl.: H04N 5/76

(54) **System for documentation of events**
Vorfalldokumentationssystem
Système de documentation d'événement

(43) Date of publication of application: 24.10.2001
(73) Proprietor: STMicroelectronics S.r.l., 20041 Agrate Brianza (Milano) (IT)
(72) Inventor: Bolcioni, Luca, 40139 Bologna (IT); Guerrieri, Roberto, 40122 Bologna (IT)
(74) Representative: Mittler, Enrico

(56) References cited:
- EP-A- 0 949 813
- WO-A-99/62741
- US-A- 5 438 423

## Description

The present invention refers to a system and to low consumption integrated circuit for documentation of events and to a relative method. Particularly it refers to a system for acquisition, elaboration and recording of a video sequence caused by a video digital camera. More particularly the system is suitable for installation in a car in order to shoot and memorise the instants of a car accident.

There are situations in which it is convenient to have a documentation of the happened events in order to determine the causes that have provoked it. It is still better if this documentation is a video that makes easy and immediate the control of the film. For instance the events relative to car accidents, to fires of building, to thefts, to code effractions and however relative to any other case in which it results useful to have such a documentation. To be noted that in the cases above exemplified, in which there could also be judicial and legal complications, it is also useful to have a safety on the identification and on the authenticity of the film.

The patent application WO 99/62741 describes a system to pick up, analyse and memorise information relative to the supervision of car accidents. The system, activated to the staring of the car, comprises a television camera for shooting the events outside the vehicle.

The digitised and memorised images in a synchronised file, have an identifying of the vehicle, a time indicator and other relative values related to the conditions of the vehicle. The file is coded and memorized on a memory device of great capacity (hard disk) accessible by means of an access code.

The Applicant has perceived that an event, of those mentioned above occurs in a very reduced fraction of time and therefore it is sufficient to record only some tens of seconds around the instant of the happened.

In sight of the state of the art described, a purpose of the present invention is that of furnishing a video recording, of good quality, reliable and certified at
the happening of an event.

In accordance to the present invention, such a purpose is reached by means of a system for the documentation of events comprising: a television camera to take images and produce a video signal; a memory device to memorise said signal; characterised in that of comprising a sensor able to activate the memorisation of said video signal on said memory device; said memory device comprising a first memory of volatile type and a second memory of non-volatile type; said video signal is memorized on said first volatile memory; said sensor actives the transfer of said video signal by said volatile memory to said non-volatile memory.

Such purpose is also reached by means of a method for the documentation of events comprising the phases of: taking images by means of a television camera; furnishing digital data which correspond to said images; memorizing said digital data in a first memory device of volatile type; activating the transfer of said digital data from said first memory device to a second memory device of non-volatile type in response to the occurring of an external event.

Thanks to the present invention, recording only some images around of the instant of the happened and using other devices in the later on described, it is possible to realise a compact system, so that it could be used also in limited rooms, that has a low current consumption as to guarantee that, also in critical situations, the system can perform its own functions also by means of a battery, and besides that it could be identified either the origin or the certification of the memorised images.

Besides, choosing an opportune sensor, for each type of event that is desired to document, the happening instant of the same event could be identified and therefore give the start to the phase of recording of the images.

The characteristics and the advantages of the present invention will result evident by the following description detailed of one embodiment, illustrated as example not imitative in the joined figures, in which:
Figure 1 shows a block scheme simplified of the system for the documentation of events in accordance to the present invention;
Figure 2 shows a more detailed blocks scheme of the system shown in Figure 1.

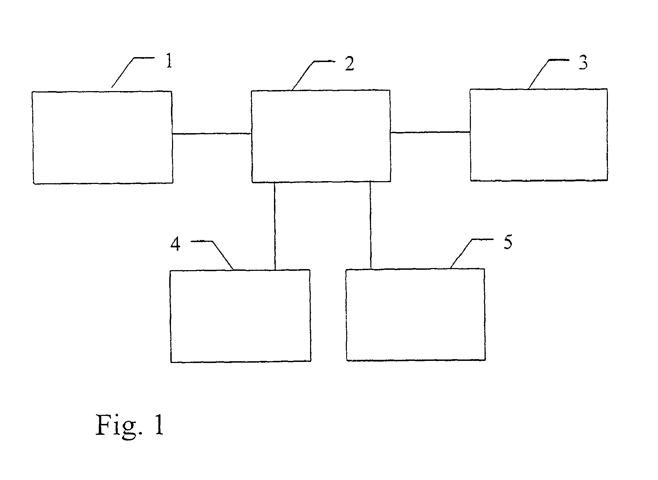

A simplified block scheme of the system for the documentation of events in accordance to the present invention, drawn in Figure 1, comprises a television camera 1, a elaboration unity 2, a sensor 3, a memory 4 of volatile type and a memory 5 of non-volatile type.

The operation of the above mentioned system is in the following way. The television camera 1 takes the images and sends them continually to the memory 4 of volatile type through the elaboration unit 2. At the filling of the memory 4 the older images will be replaced by newer ones. The activation of the sensor 3, in response to an alteration of a physical quantity of the external environment, that could be of varied type in dependence of where the system is used and of the type of event that it is wanted to be recorded, activates a phase of permanent memorisation of the images received, that is it is activated the transfer of the memorised images by the memory 4 of volatile type to the memory 5 of non-volatile type. These memories are dimensioned so that they are able to memorise images for a duration of about 1 minute. At the acting of the sensor 3, it is possible to define, by means of opportune programming, to activate instantaneously the memorizing phase the received image in the memory 5 of non-volatile type, or waiting some seconds before memorising, so as to acquire some further seconds of images, or still begin by that instant to take images. Therefore in relationship to the type of event that is desired to be recorded it is possible to decide (by means of opportune programming of the elaboration unity 2) whether the images to record are those before or after or those around of the event that has activated the sensor 3.

If for instance the system, in accordance to the present invention, is applied in a car and it is therefore used for the recording of a video sequence relative to an accident, the sensor 3 could be for instance the sensor of activation of the systems of protection of the passengers (air-bag). During a normal operation the television camera 1 acquires the images and memorises them continually in the memory 4 of volatile type. In case of an accident the systems of protection of the passengers are activated by the sensor 3 and therefore it is activated also a second way of operation that activates the phase of memorisation not temporary any more (volatile) but permanent (non-volatile) and therefore readable later on.

In this way, the system is able to furnish a reliable documentation of the instants immediately before, and in this case, preferably also of those immediately following the accident (waiting for some seconds after the activation of the sensor 3 before effecting the transfer of the data from the memory 4 of volatile type to the memory 5 of non-volatile type).

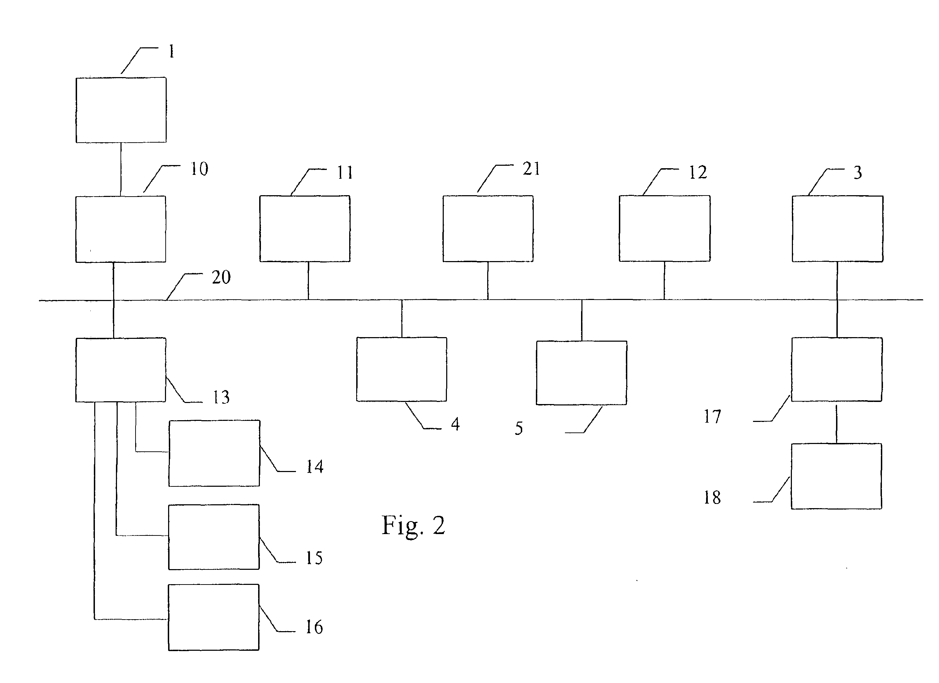

In Figure 2 it is shown a block scheme more detailed than the system shown in Figure 1.

To the television camera 1 it is associated an interface unity 10, to the elaboration unity 21 it is associated a memory 11 that contains the management program of the system performed by the elaboration unity 21 itself, and to the sensor 3 is associated a manager 12 of external and internal events (interrupt). Besides the system comprises a digital signal processor 13 to which is associated a first image memory 14, a second image memory 15 and a third work memory 16, and a arithmetic elaboration unity 17 at arbitrary precision to which it is associated a data memory 18.

All the blocks of Figure 2 communicate together by an appropriate channel of transmission (bus) 20.

To reduce the quantity of information to memorise and at the same time to have a sufficient quality of the film it has been decided, preferably, a number comprised between 12 and 15 images a second, in the QCIF format (Quarter Common Interchange Format) (144x176 pixel), in white and black. The video signal having the above characteristics is compressed by the digital signal processor 13 based on a programmable MAC (Multiply and Accumulates). The compression method used is preferably that written in the Recommendation H263 of the ITU-T (Line transmission of on telephone signals: video coding for low bitrate communication). It is possible to use other methods of compression like for instance those written in the Standard ISO/ IEC 13818- Information Technology-Generic codec of moving pictures and associated audio information- 1966.

The legal value of the film could be obtained by means of a univocal association of an identifying number of the object (for example the car plate) where the system is applied, and by the certification of the digital document that is carried out by the arithmetic elaboration unity 17 by means of a method of digital signature of DSA type (Digital Signature Algorithm) based on a system of double public and private key like described in the book of B. Schneider, "Applied cryptography," John Wiley & Sons, 1994. The system know the private key (secret) that is used for the digital signature. The people or the predisposed associations, in possession of the public key, can therefore certify to whom the film belongs consulting the data bank of the keys used for the control of the signature, are able to attest possible attempts of manipulation of the images.

The elaboration process starts with the receiving of the signal (digital) by the television camera 1. The succession of the pixel is memorized on a FIFO memory set in the interfacing unit 10. When this memory reaches a level of pre-set filling, the interfacing unity 10 sends a request of use to the first image memory 14 for the transfer of the pixel received up to that moment. Reached a certain number of acquired lines and communicated it to the elaboration unity 21 by the manager events 12, the elaboration unity 21 starts to activate the digital signal processor 13 to compress the video signal.

The DCT transformations (Discreet Cosine Transform), IDCT (Inverse Discreet Cosine Transform), quantization and inverse quantification, necessary to the compression of the video signal are realised by means of the opportune programming of the digital signal processor 13. The codification procedure at variable length (VLC) is instead carried out by the elaboration unity 21.

The first image memory 14 is used to memorise an image, the second image memory 15 is used to memorise the immediately previous image. The digital signal processor 13 carries out the elaborations (in collaboration to the elaboration unity 21) and sets the results in a third work memory 16. As normally for the applications of the present invention it is not required a fixed widthness band and the increase of the quality of the image is not appreciable, the loading and the time of elaboration of the operations related to the searching of the movement vectors have been avoided assuming that a null movement vector furnishes the best compromise between complexity and quality.

To reduce the consumes of the system in the elaboration phase of the images, it has been adopted a particular memory hierarchy. Particularly it has inserted a small working memory 16 in the same addressing space used for the memories 14 and 15 of image. Since the unity 13 develops 80% of the operations of reading/writing on this memory 16 of reduced dimensions, and considering that the consumption depends on the capacitive load associated to the lines, the current consumption is therefore reduced by the use of a memory of small dimensions. Besides, the use of a pipeline with two levels characterising the unity 13 allows to further reduce the energetic consume due to the commutation of the synchronism signal. In fact since the unity 13 is working for the 75% of the whole time, the use of a deeper pipeline would have caused an increase of the consumes due to the dividing elements of the various stages, without an increasing of the final performances.

For each byte codified in conformity with what scheduled by the compression method adopted two operations are performed: a first operation to memorise the data in the memory 4 of volatile type, a second operation to prepare the structure data that will be used in the certification process.

At the filling of the memory 4 it will be necessary to replace the older images with the most recent ones. The compression of the video signal, in accordance to the selected method, is, in first approximation, calculating and recording the data that correspond to the difference between a starting image and the following and so on for the other following images. If at the receiving of the new images, during the memorisation of the compressed data, the starting image is deleted there would not be any more the base data to reconstruct the recorded images. In accordance to the present invention, it has been opportunely programmed the elaboration unity 21 so as to insert in the memory 4 a starting image, for the following images, at pre-set times, for instance every 10 images. Accordingly as a maximum 10 images would be lost in the case in which the recording begins with a difference image rather than with a starting image.

The arithmetical elaboration unity 17 allows to carry out the certification operations. Preferably it has been selected a method of digital signature of DSA type as it is possible to prepare an elevated number of operations (pre-elaboration) in advance and to memorise them in the memory (non-volatile) 11. In phase of turning on of the system these data will be transferred in the data memory (volatile) 18. During the elaboration, the reading of these parameters is masked to the external to avoid to furnish indications that could take to the recognition of the private key. Particularly the possible terminals accessible from the external are isolated by a buffer circuit.

The digital signature is associated to each image. This means that the codification of the single image is considered like the bit sequence on which to perform the certification operation. The result (320 bits) is inserted in the video signal compressed using an optional field that the normal decoders discard. In the case of the standard H263 this field is present at level of the description of the image and is denominated PSPARE. Since the length of the PSPARE field is fixed at 8 bits, it is necessary to use 40 different PEI-PSPARE sequences (PEI of length 1 bit used to enable of the PSPARE field) with PEI fixed height for all the 40 insertion operations of the signature value of the preceding image, before being able to proceed with the rest of the scheduled fields by the codification method introduced by a low value of PEI. To be able to realise the verifying process of the signature, it is therefore necessary to extract by the compressed documentation this field and to proceed with the relative operations as described in the proposed reference.

Each program of each coprocessor of the system (elaboration unity 21, digital signal processor 13, elaboration unity arithmetic 17) is able to modify the space of accessible memory allowing to carry out different operations simultaneously. To allow a correct elaboration and to be able to exploit in full the degree of parallelism at disposition, it is necessary a correct management politics of the local memories. A first level of synchronism is obtained by interrupts: in this way external events could be made known to the program in execution on the unity 21 that can adopt different solutions accordingly to own state and to the sequence of external recognised events. The synchronism politics among the elements belonging to the system on the single chip uses a different solution that makes use of explicit instructions of suspension (wait) either of the unity 21 or of the unity 13. Particularly a protocol (handshake) allows the activation of the coprocessors by means of a starting signal (start) by the unity 21. Once this signal has been recognised the individuated coprocessor (unity 13 or 17) notifies its state of busy by means of a signal "busy" stopping the activity of the unity 21 in the case in which this has to use the local resources assigned to the coprocessors. The unity 21 can use again such resources only after the liberation of the same by the coprocessor in activity: this event is signalled with the deactivation of the signal "busy" at the end of the execution of the procedure by the coprocessor unity.

In an embodiment of the system, in accordance to the present invention, some described elements and being part of the system have been realised on an only chip so to allow a better realisation and exploiting the resources employed either under a point of view of the performances and under a point of view of the costs as well as under a point of view of the reduction of the dimensions. The integrated units on the same chip are: the elaboration unity 21, for instance a 8086; the memory 11 that contains the management program of the system that is of FLASH type (16k x 16 bit); the manager of events 12 is of the type 8259; the images memories 14 and 15 are RAM memories having dimensions 25k x 8 able of store a single image in format QCIF; the RAM work memory 16 has dimensions 1k x 16; the RAM memory of data is of dimensions 2k x 16. The units 10, 13 and 17 respectively for interfacing with the television camera, of elaboration and arithmetic elaboration have been realised on purpose for the implementation on a single chip of the system. Externally, on a card on which it is also set the circuit of which above, there are: the television camera 1 (for instance a PB-0100 of PhotoBit) able of furnish data and signals of synchronism in digital form; the sensor 3 that, in accordance to the type of application, could be an acceleration sensor (to record accidents), of fire, of presence (for thefts or control of access); the memory 4 of volatile type could be a dynamic memory of 16 Mbit; the memory 5 non-volatile of FLASH type could be a memory by 16 Mbit (for instance a M29F160BT of STMicroelectronics)

It is possible to feed the whole system by means of an external power supply and in alternative to or in combination it is possible to be fed with a battery. For instance, in the case of use of the system for the documentation of car accidents, the whole could be fed by the battery of the car, the system is however preferably furnished also of an auxiliary battery able to feed the system in the transfer phase of the data by the volatile memory to the non-volatile memory, when because of an accident the mainly battery could be out of order.

With the above described system it is possible to memorise about 80 s of film. For the application in a car it has been set that at the activation of the sensor 3 the system is able to acquire images for still 15 s, before effecting the permanent recording of the images. In this way it is obtained a recording of about 65 seconds before the accident and of about 15 seconds after the accident.

In a further embodiment of the system, in accordance to the present invention, all the circuitry elements (inclusive the television camera 1, the sensor 3, the memory 4 of volatile type and the non-volatile memory 5) have been realised on an only chip so that to further reduce the dimensions and the costs. Eventually the sensor 3 can be put outside the integrated circuit and set in the best place to be able to fulfil its function. In alternative to the integration of all the circuitry elements in a single integrated circuit it is possible to divide the system in more chips (multi-chips) and put them in a unique package or it is also possible to use a double face micro-board in which the micro chip (or the micro chips)(in the package or not) and other possible components are assembled superficially.

The complete system composed of the circuits of which above and the feeding battery is preferably placed in a suitable container to bear bumps of great intensity and fire resistant in order to avoid the destruction of the circuits.

To recover the recorded images, the reading of the data memorized in the memory 5 non-volatile occurs through opportune contacts predisposed on the card both to furnish the feeding and to receive the data, preferably in a serial form.

The fact of having assigned the management of the system to a programmable architecture (program of the elaboration unity 21) allows to have many advantages among which that of being able to vary the type of signature (in dependence for instance to the different countries of use of the system), and to be able to vary the performances of the system simply modifying the management program.

Moreover it also allows, when it is necessary, to be able to memorise (in the PSPARE field) other values like date and activation time of the sensor and of each single image and of parameters of the environment to be documented, for instance in the case of car accidents, the data of instrument panel of the car as speeds, ABS activation, etc. and other possible data coming from by other sensors (acceleration, temperature, etc.) placed for the occasion, and also the location data deriving by a GPS system.

## Claims

1. System for documentation of events comprising:
a television camera (1) to take images and produce a video signal;
a memory device (4, 5) to memorise said signal;
**characterised in that** the system comprises:
a sensor (3) able to activate the memorisation of said video signal on said memory device (4, 5);
said memory device (4 5) comprising a first memory (4) of volatile type and a second memory (5) of non-volatile type;
said video signal is memorized on said first volatile memory (4);
said sensor (3) actives the transfer of said video signal by said volatile memory (4) to said non-volatile memory (5).

2. System in accordance with claim 1 **characterised in that** said sensor (3) before activating the memorisation of said video signal on said memory device (4, 5) waits for a pre-set time in order to acquire further images.

3. System in accordance with claim 1 **characterised by** comprising a digital signal processor (13) that compresses said video signal before being memorized by means of a compression method.

4. System in accordance with claim 3 **characterised in that** said compression method is in accordance to the ITU-T standard, recommendation H 263.

5. System in accordance with claim 1 **characterised by** comprising a arithmetical elaboration unity 17 that certifies said video signal before being memorized by means of a method of digital signature.

6. System in accordance with claim 1 **characterised in that** said video signal is a digital signal.

7. Method for documentation of events comprising the phases of:
taking images by means of a television camera (1);
furnishing digital data which correspond to said images;
memorizing said digital data in a first memory device (4) of volatile type;
activating the transfer of said digital data from said first memory device (4) to a second memory device (5) of non-volatile type in response to the occurring of an external event.

8. Method in accordance with claim 7 **characterised in that** said digital data before being memorized in said first memory device (4) are encoded by means of a compression method.

9. Method in accordance with claim 7 **characterised in that** said digital data before being memorized in said first memory device (4) are certified by means of a method of digital signature.

10. Method in accordance with claim 7 **characterised in that** said digital data before being memorized are integrated with relative temporal data.

11. Method in accordance with claim 7 **characterised in that** on the occurring of said external event a sensor is activated.

12. Integrated circuit for documentation of events comprising the circuitry elements of the system in accordance to claim 1.

## Patentansprüche

1. System für die Dokumentation von Ereignissen, aufweisend:
eine Aufnahmekamera (1) zum Auzeichnen von Bildern und zum Erzeugen eines Videosignals;
eine Speichervorrichtung (4, 5) zum Speichern des Signals;
**dadurch gekennzeichnet, dass** das System Folgendes aufweist:
einen Sensor (3), der dazu in der Lage ist, das Speichern des Videosignals in der Speichervorrichtung (4, 5) zu aktivieren;
wobei die Speichervorrichtung (4, 5) einen ersten Speicher (4) des flüchtigen Typs und einen zweiten Speicher (5) des nicht-flüchtigen Typs aufweist;
wobei das Videosignal in dem ersten, flüchtigen Speicher (4) gespeichert wird;
wobei der Sensor (3) den Transfer des Videosignals von dem flüchtigen Speicher (4) zu dem nicht-flüchtigen Speicher (5) aktiviert.

2. System nach Anspruch1,
**dadurch gekennzeichnet, dass** der Sensor (3) vor der Aktivierung der Speicherung des Videosignals in der Speichervorrichtung (4, 5) für eine vorbestimmte Zeitdauer wartet, um weitere Bilder zu erhalten.

3. System nach Anspruch 1,
**dadurch gekennzeichnet, dass** es einen digitalen Signalprozessor (13) aufweist, der das Videosignal vor dem Speichern von diesem durch ein Kompressionsverfahren komprimiert.

4. System nach Anspruch 3,
**dadurch gekennzeichnet, dass** das Kompressionsverfahren dem ITU-T-Standard, Empfehlung H 263, entspricht.

5. System nach Anspruch 1,
**dadurch gekennzeichnet, dass** es eine arithmetische Ausarbeitungseinheit (17) aufweist, die das Videosignal vor dem Speichern von diesem mittels eines digitalen Signaturverfahrens zertifiziert.

6. System nach Anspruch 1,
**dadurch gekennzeichnet, dass** es sich bei dem Videosignal um ein digitales Signal handelt.

7. Verfahren für die Dokumentation von Ereignissen, das folgende Phasen aufweist;
Aufnehmen von Bildern mittels einer Aufnahmekamera (1);
Bereitstellen von digitalen Daten, die den Bildern entsprechen;
Speichern der digitalen Daten in einer ersten Speichervorrichtung (4) des flüchtigen Typs;
Aktivieren des Transfers der digitalen Daten von der ersten Speichervorrichtung (4) zu einer zweiten Speichervorrichtung (5) des nicht-flüchtigen Typs in Abhängigkeit von dem Auftreten eines externen Ereignisses.

8. Verfahren nach Anspruch 7,
**dadurch gekennzeichnet, dass** die digitalen Daten vor dem Speichern in dem ersten Speicher (4) mittels eines Kompressionsverfahrens codiert werden.

9. Verfahren nach Anspruch 7,
**dadurch gekennzeichnet, dass** die digitalen Daten vor dem Speichern in der ersten Speichervorrichtung (4) mittels eines digitalen Signaturverfahrens zertifiziert werden.

10. Verfahren nach Anspruch 7,
**dadurch gekennzeichnet, dass** die digitalen Daten vor dem Speichern mit zugehörigen zeitlichen Daten integriert werden.

11. Verfahren nach Anspruch 7,
**dadurch gekennzeichnet, dass** bei Auftreten des externen Ereignisses ein Sensor aktiviert wird.

12. Integrierte Schaltung für die Dokumentation von Ereignissen, die die Schaltungselemente des Systems nach Anspruch 1 aufweist.

## Revendications

1. Système permettant la documentation d'événements, comprenant:
une caméra vidéo (1) pour prendre des images et produire un signal vidéo ;
un dispositif de mémoire (4, 5) pour mémoriser ledit signal ;
**caractérisé en ce que** le système comprend:
un capteur (3) apte à activer la mémorisation dudit signal vidéo sur ledit dispositif de mémoire (4, 5) ;
ledit dispositif de mémoire (4, 5) comprenant une première mémoire (4) de type volatile et une seconde mémoire (5) de type non volatile;
ledit signal vidéo est mémorisé sur la mémoire volatile (4);
ledit capteur (3) active le transfert dudit signal vidéo par ladite mémoire volatile (4) vers ladite mémoire non volatile (5).

2. Système selon la revendication 1, **caractérisé en ce que** ledit capteur (3), avant d'activer la mémorisation dudit signal vidéo sur le dispositif de mémoire (4, 5), attend pendant une durée préétablie pour acquérir de nouvelles images.

3. Système selon la revendication 1, **caractérisé en ce qu'**il comprend un processeur de signal numérique (13) qui compresse ledit signal vidéo avant d'être mémorisé au moyen d'une méthode de compression.

4. Système selon la revendication 3, **caractérisé en ce que** ladite méthode de compression est conforme à la norme ITU-T, recommandation H 263.

5. Système selon la revendication 1, **caractérisé en ce qu'**il comprend une unité d'élaboration arithmétique (17) qui certifie ledit signal vidéo avant d'être mémorisée au moyen d'une méthode de signature numérique.

6. Système selon la revendication 1, **caractérisé en ce que** ledit signal vidéo est un signal numérique.

7. Procédé permettant la documentation d'évènements, comprenant les phases consistant à :
prendre des images à l'aide d'une caméra vidéo (1);
fournir des données numériques qui correspondent auxdites images ;
mémoriser lesdites données numériques dans un premier dispositif de mémoire (4) de type volatile ;
activer le transfert desdites données numériques du premier dispositif de mémoire (4) vers un second dispositif de mémoire (5) de type non volatile en réponse à un événement extérieur.

8. Procédé selon la revendication 7, **caractérisé en ce que** lesdites données numériques, avant d'être mémorisées dans le premier dispositif de mémoire (4), sont codées au moyen d'une méthode de compression.

9. Procédé selon la revendication 7, **caractérisé en ce que** lesdites données numériques, avant d'être mémorisées dans le premier dispositif de mémoire (4), sont certifiées au moyen d'une méthode de signature numérique.

10. Procédé selon la revendication 7, **caractérisé en ce que** lesdites données numériques, avant d'être mémorisées, sont intégrées avec des données temporelles relatives.

11. Procédé selon la revendication 7, **caractérisé en ce que**, lorsque survient ledit événement extérieur, un capteur est activé.

12. Circuit intégré permettant la documentation d'évènements, comprenant les éléments de circuits du système de la revendication 1.
